# EUROPEAN PATENT SPECIFICATION

(11) **EP 3 006 140 B1**
(45) Date of publication and mention of the grant of the patent: **19.04.2017**
(21) Application number: 14188164.9
(22) Date of filing: 08.10.2014
(51) Int. Cl.: B23B 27/14

(54) **Turning tool cutting insert and turning tool**
Dreheinsatz und Drehwerkzeug
Insert de tournage et outil de tournage

(43) Date of publication of application: 13.04.2016
(73) Proprietor: Sandvik Intellectual Property AB, 811 81 Sandviken (SE)
(72) Inventor: Löf, Ronnie, SE-811 41 SANDVIKEN (SE)

(56) References cited:
- EP-A1- 1 867 416
- EP-A1- 2 641 678
- EP-A2- 0 314 647
- EP-B1- 0 914 227
- EP-B1- 1 152 892
- WO-A1-2012/023325
- US-A- 3 786 541
- US-A- 3 973 307
- US-A- 4 056 871
- US-A- 4 259 033
- US-A- 5 116 167
- "Section: General Turning" In: "Metalworking Products - Turning Tools", 2000, AB Sandvik Coromant, Sweden, XP002736953, page A10, A78, * Insert CNMG, Shank Tool DCLNR/L; pages A10, A78 *

## Description

### TECHNICAL FIELD

The present invention relates to a turning tool cutting insert, as per the preamble of claim 1 and as known from document US 5 116 167 A. A further aspect of the invention relates to a turning tool comprising such a turning tool cutting insert.

### BACKGROUND

A cutting insert held in a turning tool is used for turning of a workpiece on a lathe. Different kinds of material in workpieces put different kinds/amounts of stress on the cutting insert. A cutting insert may thus be designed for cutting a particular kind of material or group of materials. The present invention relates to the cutting of tough materials such as e.g. stainless steel, and in particular to cutting inserts for use in turning workpieces made from such materials. Cutting such materials puts high strain on an engaging cutting edge of a relevant cutting insert. Thus the cutting edge will be subjected to higher wear than when cutting other kinds of materials. The wear of a cutting edge of a relevant insert is commonly controlled by selecting suitable (low) cutting depth, cutting speed and feed rate during a relevant turning operation. Another approach is selecting a cutting insert made of an insert material and/or comprising a coating which is suited for cutting such materials. A further alternative is to adapt the geometry of a cutting insert for cutting tough materials.

EP 579963 discloses a polygonal, lay down indexable cutting insert for light feed and light depth of cut application. A variable width land surface extends rearwardly from a cutting edge of the insert. The variable width land surface is of narrower width at corners of the insert than along flanks of the insert. The variable width land surface has a first variable descending angle, i.e. the rake angle, which is greater at each corner of the insert than along the side flanks of the insert. A transition of the variable land surface, between a corner and a flank, is not discussed in EP 579963.

EP 2641677 discloses a cutting insert which ensures fracturing resistance and chipping resistance of the insert on light cutting of stainless steel. The cutting insert is provided with a cutting edge which has a corner section that forms a convex arc shape when seen in a planar view from a direction facing a rake face of the cutting insert and a linear section that is in contact with the corner section at least at one end of the corner section and extends linearly. The cutting edge is provided with a first region along a portion of the corner section when seen in a planar view, a second region along a portion of the linear section, and a third region between the first region and the second region. The third region extends along a portion of the linear section and along a portion of the corner section. A rake angle of the cutting edge in the third region is made greater than rake angles of the cutting edges in the first region and the second region. Thus, it is made possible to avoid abnormal wear by suppressing the occurrence of burrs at a cutting boundary.

Common turning tool cutting inserts, e.g. of rhombus or square shape such as disclosed in the two above-mentioned documents, have at least one cutting edge extending along at least one linear edge portion and an adjoining convex corner edge portion. The cutting inserts disclosed in both EP 579962 and EP 2641677 are designed for light cutting applications, i.e. cutting applications in which a portion of a chip cut from a workpiece by the corner edge portion of the cutting edge forms a considerable portion of the entire chip. As opposed to a larger chip cut from a workpiece with the depth of cut extending from the corner edge portion a considerable distance into the linear edge portion, e.g. a distance of up to three times a radius of the corner edge portion into the linear edge portion. In such a large chip, the portion formed by the corner edge portion only forms a minor portion of the entire chip. A cross section area of such a large chip is considerably larger in a portion cut by the linear edge portion than in a portion cut by the corner edge portion. Thus, the linear edge portion is subjected to larger forces than the corner edge portion. Moreover, despite the portion of a chip formed by the corner edge portion forming a minor portion of the entire chip, the portion of the chip formed by the corner edge portion influences the shape and forming direction of the chip in a manner which subjects the linear edge portion to abrading forces.

These are two reasons for why the cutting edge at the linear edge portion is commonly designed to be stronger than at the corner edge portion, e.g. with a smaller rake angle at the linear edge portion than at the corner edge portion and/or a wider primary land adjacent to the linear edge portion than adjacent to the corner edge portion. In known cutting inserts a primary land adjacent the cutting edge has a transitional portion of the primary land arranged along the part of the linear edge portion closest to the corner edge portion, in which transitional portion the primary land changes from the design along the corner edge portion to a different design along the remaining part of the linear edge portion.

Despite the stronger design of the linear edge portion of the known cutting inserts, the linear edge portion closest to the corner edge portion is often worn to a larger degree during cutting, in particular during cutting of tough materials such as stainless steel, than the remaining engaging portion of the linear edge portion and the corner edge portion.

### SUMMARY

It is an object of the present invention to provide a turning tool cutting insert having a more even wear resistance along a cutting edge comprising a linear edge portion and a corner edge portion.

According to an aspect of the invention, the object is achieved by a turning tool cutting insert according to independent claim 1.

Since the transitional primary land portion is arranged only adjacent the outer portion of the corner edge portion and accordingly, the transition between the first and second primary land portions is provided along the corner edge portion and not along the linear edge portion, the wear resistance of the linear edge portion is improved due to the first primary land portion extending along the entire linear edge portion. As a result, the above mentioned object is achieved. An improved wear resistance compared to the known cutting inserts of EP 579962 and EP 2641677 is achieved.

It has been discovered by the inventor that arranging a transitional portion of the primary land along a portion of the corner edge portion reduces the occurrence of wear of the linear edge portion closest to the corner edge portion. Surprisingly, it has been discovered by the inventor that it is possible to arrange the transitional portion of the primary land within the space available along a portion of the corner edge portion, even with the smaller standard ISO cutting insert nose radiuses of 0,4 mm and 0,8 mm.

It has been discovered by the inventor that forming a transitional portion of the primary land in the corner portion of the cutting edge instead of forming a separate third portion of the cutting edge between the corner portion and the linear portion, as disclosed in EP 2641677, provides a solution, which is suitable not only for shallow depth of cut but also for deeper depth of cut avoiding the tendency of increased wear of the cutting edge in the linear edge portion closest to the corner edge portion.

A primary land is an area of the rake face closest to a cutting edge. The rake face comprises further areas, which may include raised portions and ridge portions forming e.g. chip breakers. The primary land extends along the cutting edge. The primary land can have a width and be distinguishable from parts of the rake face which are located further away from the cutting edge by means a discontinuity, such as for example a change in inclination or a step. The primary land can alternatively be a continuous part of the rake face.

The primary land forms the rake angle at the cutting edge. The width of the primary land and/or the rake angle of the primary land vary/varies along the cutting edge. In a cutting insert according to the present invention each of the first and second primary land portions has a consistent width and rake angle. The widths of the first and second primary land portions extend perpendicularly to the first cutting edge.

It is in the transitional primary land portion where a width transition takes place from the width of the first primary land portion to the width of the second primary land, and/or a rake angle transition takes place from the rake angle of the first primary land portion to the rake angle of the second primary land portion. That is, the term "forming a transition" in the context of the transitional primary land portion means that the shape and/or orientation and/or form of the transitional primary land portion changes along its length, from a shape and/or orientation and/or form substantially similar to that of the first primary land portion where the transitional primary land portion adjoins the first primary land portion, to a shape and/or orientation and/or form substantially similar to that of the second primary land portion where the transitional primary land portion adjoins the second primary land portion.

The straight linear edge portion is straight and linear, at least seen in a top view of the cutting insert.

The rake angles discussed herein are nominal rake angles, i.e. rake angles measured between a plane parallel with a median plane of one of the rake faces and a relevant primary land portion. The median plane can be defined as a plane in the middle between a top surface and a bottom surface of the cutting insert that would transect the insert body into two halves, wherein a rake face including a primary land is provided on one or both of the top and bottom surfaces. The actual rake angle when the cutting insert is used depends on the relevant turning tool and how it is mounted in a relevant lathe.

The corner edge portion, which is convex, may be substantially symmetrical about a bisector of the corner edge portion. Accordingly, the central portion of the corner edge portion is the edge portion crossing to the bisector, i.e. a middle of the corner edge portion.

The cutting insert may be indexable and double-sided, i.e. the cutting insert may be positioned in different positions in a recess forming an insert seat of a turning tool with one of the relevant cutting edges extending from the insert seat to engage with a workpiece in a lathe. The cutting insert may be adapted to be held in a recess forming an insert seat of a turning tool.

The cutting insert may be manufactured from a material comprising e.g. one or more of cemented carbide, ceramics, cubic boron nitride, polycrystalline diamond, and cermet. The cutting insert may be coated with surface coatings such as e.g. titanium nitride, titanium carbonitride, and/or aluminium oxide.

The cutting insert may be adapted to cutting tough materials, such as stainless steel.

The cutting insert is configured for a depth of cut extending from the corner edge portion a considerable distance into the linear edge portion, e.g. a distance of up to three times a radius of the corner edge portion, or more, into the linear edge portion.

According to embodiments, the first primary land portion may extend over a first distance of the rake face, the first distance extending perpendicularly to the linear edge portion, and the second primary land portion may extend over a second distance of the rake face, the second distance extending perpendicularly to tangents of the corner edge portion.

The first distance may be longer than the second distance. In this manner a strong cutting edge may be provided along the linear edge portion of the cutting edge. In embodiments where the cutting insert is ha a negative shape, the first distance extending perpendicularly to the linear edge portion and the second distance extending perpendicularly to tangents of the corner edge portion entails that the first and second distances extend perpendicularly to the relief face of the insert body. The first distance and the second distance correspond to the widths of the first and second primary land portions, respectively.

According to embodiments, the first distance may be within a range of 50 - 500 % longer than the second distance. In this manner a strong cutting edge may be provided along the linear edge portion of the cutting edge.

According to the invention, the second primary land portion has a larger rake angle than the first primary land portion. Put differently, the second primary land portion has a smaller wedge angle than the first primary land portion. In this manner a sharp cutting edge may be provided at the central portion of the corner edge portion while a strong cutting edge may be provided along the liner edge portion.

According to the invention, the transitional primary land portion provides a gradual transition from the first primary land portion to the second primary land portion. In this manner a strong cutting edge may be provided along the transitional primary land portion. The term "gradual transition" in the context of the transitional primary land portion entails that the shape and/or orientation and/or form gradually changes along a length of the transitional primary land portion from a shape and/or orientation and/or form substantially similar to that of the first primary land portion where the transitional primary land portion adjoins the first primary land portion, to a shape and/or orientation and/or form substantially similar to that of the second primary land portion where the transitional primary land portion adjoins the second primary land portion. Thus, the transition takes place gradually and continuously. According to embodiments, a width of the primary land measured perpendicularly from the cutting edge in the transitional primary land portion may decrease gradually from the first distance to the second distance. The width of the transitional primary land extends perpendicularly to tangents of the corner edge portion.

According to the invention, the rake angle in the transitional primary land portion increases gradually from a rake angle in the first primary land portion to the larger rake angle in the second primary land portion.

According to embodiments, the first cutting edge may comprise a straight further linear edge portion adjoining the corner edge portion opposite to the linear edge portion. The first cutting edge may be symmetrical about a bisector of the corner edge portion. In this manner a symmetrical first cutting edge may be provided, such as in a rhombus or square ISO cutting insert. This may entail that the straight further linear edge portion is symmetrical to the linear edge portion about the bisector.

According to embodiments, an 80 degree angle may be formed between the linear edge portion and the further linear edge portion. I this manner a rhombus ISO cutting insert with 80 degree corner angle may be provided.

According to embodiments, the insert body may comprise four cutting edges, each cutting edge being substantially similar to the first cutting edge, such that the turning tool cutting insert is four times indexable in a turning tool. The insert body may comprise more than four cutting edges. A double-sided, rhombus shaped insert body may be provided with eight cutting edges, wherein there is a cutting edge in each corner of the top surface and the bottom surface.

According to embodiments, the second primary land portion may have a constant width and a constant rake angle. The width of the second primary land portion extends perpendicularly to tangents of the corner edge portion.

According to a further aspect of the invention, there is provided a turning tool, according to claim 9, comprising a tool body, the tool body having a longitudinal axis extending in a direction from an attachment portion of the tool body towards a distal end portion of the tool body. The tool body is provided with a recess for receiving a cutting insert at the distal end portion. The recess is shaped such that a cutting insert positioned in the recess points an engaging corner edge portion of a first cutting edge thereof in a direction sidewardly of the longitudinal axis. A turning tool cutting insert according to any aspect and or embodiment discussed herein is arranged in the recess.

According to embodiments, a bisector of the engaging corner edge portion of the first cutting edge may extend sidewardly at an angle within a range of 43 - 47 degrees to the longitudinal axis of the tool body.

Further features of, and advantages with, the present invention will become apparent when studying the appended claims and the following detailed description.

### BRIEF DESCRIPTION OF THE DRAWINGS

Various aspects of the invention, including its particular features and advantages, will be readily understood from the example embodiments discussed in the following detailed description and the accompanying drawings, in which:
Fig. 1 illustrates a turning tool cutting insert according to embodiments,
Fig. 2 illustrates a partial top view of a first cutting edge of a turning tool cutting insert according to embodiments,
Fig. 3 illustrates a partial perspective view of a first cutting edge of a turning tool cutting insert according to embodiments,
Fig. 4 illustrates a partial top view of a first cutting edge of a turning tool cutting insert according to embodiments, and
Fig. 5 illustrates a turning tool according to embodiments.

### DETAILED DESCRIPTION

Aspects of the present invention will now be described more fully. Like numbers refer to like elements throughout. Well-known functions or constructions will not necessarily be described in detail for brevity and/or clarity.

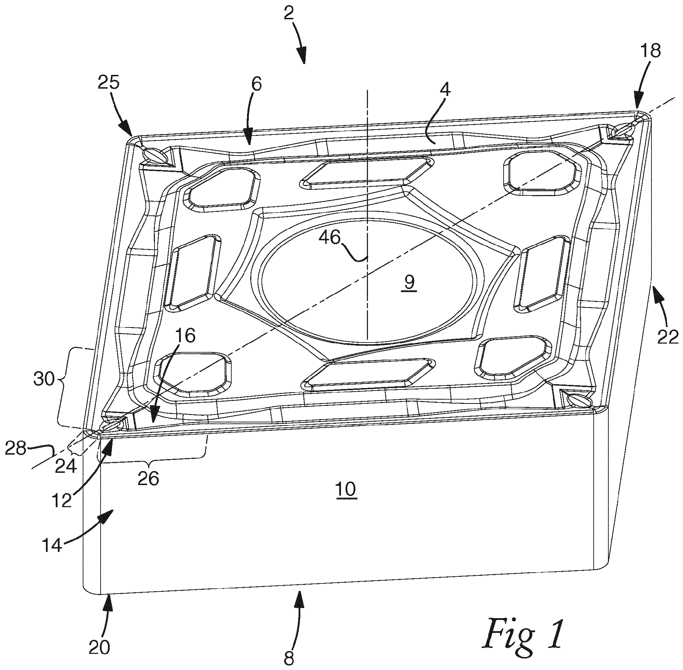

**Fig. 1** illustrates a turning tool cutting insert 2 according to embodiments. The cutting insert 2 comprises an insert body 4. The insert body 4 is delimited by a top surface 6, an opposite bottom surface 8, and a side surface 10 extending between the top and bottom surfaces 6, 8. The cutting insert 2 is provided with a central hole 9 which extends through the insert body 4. The top and bottom surfaces 6, 8 are generally planar and are substantially parallel to each other and are provided with raised portions and ridge portions. The cutting insert 2 is indexable and the top surface 6 or the bottom surface 8 may face upwardly when the cutting insert 2 is mounted in a turning tool.

The insert body 4 comprises at least a first cutting edge 12 extending along an intersection between a relief face 14 and a rake face 16. The relief face 14 is provided at the side surface 10 of the insert body 4 and the corresponding rake face 16 is provided at the top surface 6.

The cutting insert body has a generally rhombus shape. A median plane can be defined as a plane in the middle between the top surface 6 and the bottom surface 8 that would transect the insert body into two halves, i.e. a top half and a bottom half. The rake face 16 is provided on one or both of the top and bottom surfaces.

The cutting insert 2 of these embodiments comprises four substantially identical cutting edges. In addition to the first cutting edge 12, there are provided a second cutting edge 18 at the top surface 6 opposite to the first cutting edge 12, and third and fourth cutting edges 20, 22 at the bottom surface 8. Accordingly, the cutting insert 2 is four times indexable in a turning tool.

The first cutting edge 12 comprises a convex corner edge portion 24 and a straight linear edge portion 26. The straight linear edge portion 26 is straight and linear at least as seen in a top view of the cutting insert, i.e. seen along a centre axis 46 of the central hole 9.The corner edge portion 24 adjoins the linear edge portion 26. A straight further linear edge portion 30 adjoins the corner edge portion 24 opposite to the linear edge portion 26. The first cutting edge 12 is symmetrical about a bisector 28 of the corner edge portion 24, the symmetry including the linear edge portion 26 and the further linear edge portion 30.

Also an intermediate corner portion 25 of the rhombus shaped insert body 4, and corresponding corner portions, may form part of cutting edges. That is, depending on a relevant turning tool either the corner edge portion 24 engages with a workpiece or the intermediate corner portion 25 engages with a workpiece.

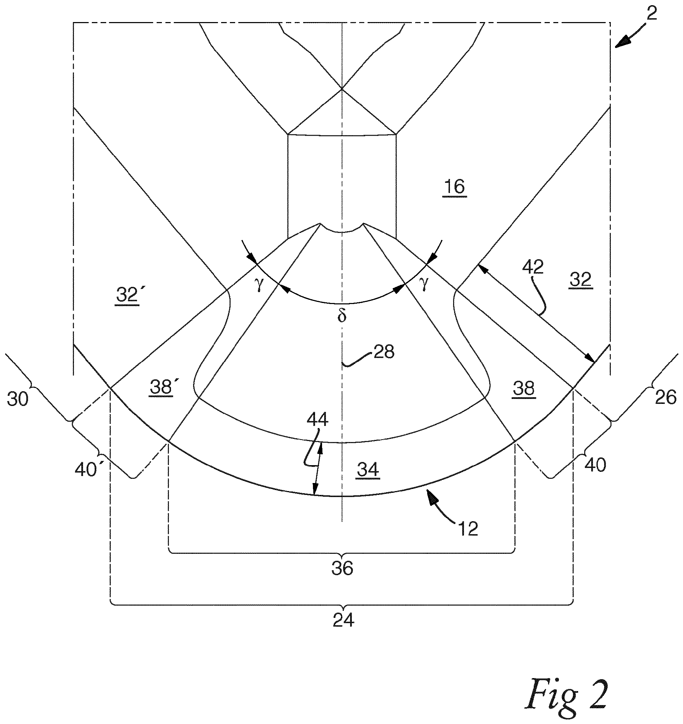

With reference to Figs. 2 - 4 below, various embodiments of the first cutting edge 12 and an adjacent primary land portion are discussed. The discussion applies mutatis mutandis to a cutting edge including the intermediate corner portion 25.

**Fig. 2** illustrates a partial top view of the first cutting edge 12 of a turning tool cutting insert 2 according to embodiments. The rake face 16 comprises a primary land extending along the first cutting edge 12. The primary land comprises a first primary land portion 32 adjacent the linear edge portion 26, and a second primary land portion 34 adjacent a central portion 36 of the corner edge portion 24. The central portion 36 is the edge portion crossing the bisector 28 of the corner edge portion 24. The primary land further comprises a transitional primary land portion 38 adjoining the first primary land portion 32 and the second primary land portion 34, and forming a transition between the first primary land portion 32 and the second primary land portion 34. The transitional primary land portion 38 is arranged only adjacent an outer portion 40 of the corner edge portion 24, the outer portion 40 adjoining the central portion 36 of the corner edge portion 24. Put differently, the corner edge portion 24 of the first cutting edge 12 comprises the central portion 36 and the outer portion 40. The second primary land portion 34 extends along the central edge portion 36 and the transitional primary land portion 38 extends along the outer portion 40. The transitional primary land portion 38 does neither extend along the central portion 36 nor along linear edge portion 26.

The first primary land portion 32 differs from the second primary land portion 34. In these embodiments, the first primary land portion 32 extends over a first distance 42 of the rake face 16. The first distance 42 extends in a direction perpendicularly to the linear edge portion 26. The second primary land portion 34 extends over a second distance 44 of the rake face 16. The second distance 44 extends in a direction perpendicularly to tangents of the corner edge portion 24. The first distance 42 is longer than the second distance 44.

The first distance 42 is at least 50 % longer than the second distance 44. In these embodiments the first distance 42 is approximately three times as long as the second distance 44. The transitional primary land portion 38 provides a gradual transition from the first primary land portion 32 to the second primary land portion 34. A width of the primary land measured perpendicularly to the first cutting edge 12 in the transitional primary land portion 38 decreases gradually from the first distance 42 to the second distance 44.

Mentioned purely as an example, the first distance 42 may be within the range of 0,1 - 0,5 mm and the second distance 44 may be within the range of 0,05 - 0,25 mm in a cutting insert having a linear edge portion 26 length of approximately 9 - 19 mm. In a cutting insert having a longer linear edge portion 26, the first distance may be up to 1 mm.

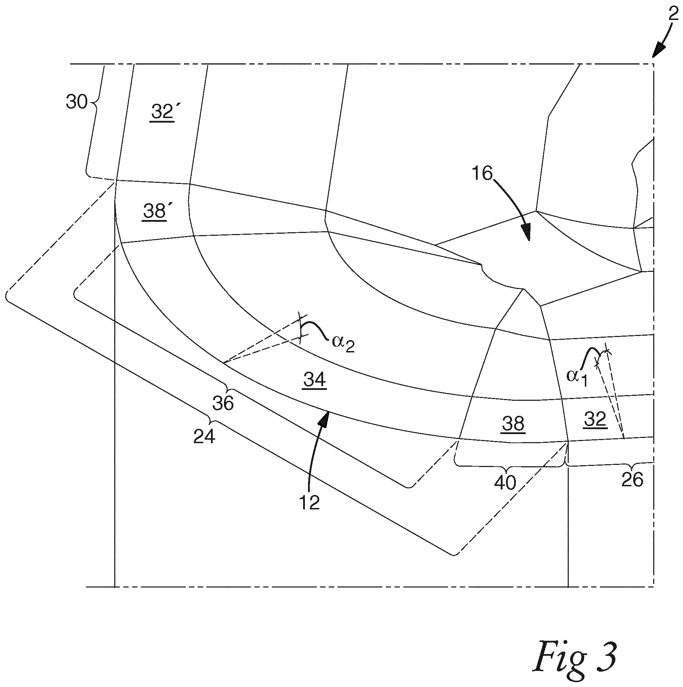

**Fig. 3** illustrates a partial perspective view of the first cutting edge 12 of a turning tool cutting insert 2 according to embodiments. Again, the rake face 16 comprises a primary land extending along the first cutting edge 12. The primary land comprises a first primary land portion 32 adjacent the linear edge portion 26, and a second primary land portion 34 adjacent a central portion 36 of the corner edge portion 24. The primary land further comprises a transitional primary land portion 38 adjoining the first primary land portion 32 and the second primary land portion 34, and forming a transition between the first primary land portion 32 and the second primary land portion 34. The transitional primary land portion 38 is arranged only adjacent an outer portion 40 of the corner edge portion 24, the outer portion 40 adjoining the central portion 36 of the corner edge portion 24.

Again, the first primary land portion 32 differs from the second primary land portion 34. In these embodiments the second primary land portion 34 has a larger rake angle α2 than rake angle α1 of the first primary land portion 32. The transitional primary land portion 38 provides a gradual transition from the first primary land portion 32 to the second primary land portion 34. The rake angle in the transitional primary land portion 38 increases gradually from the rake angle α1 in the first primary land portion 32 to the larger rake angle α2 in the second primary land portion 34.

Mentioned purely as an example, the rake angle α1 in the first primary land portion 32 may be within a range of -15 - 15 degrees, which means that the wedge angle in the first primary land portion 32 may be within a range of 105 - 75 degrees. The wedge angle is the angle formed by the insert body, i.e. the angle between the relief face 14 and the primary land of the rake face 16. The rake angle α2 in the second primary land portion 34 may be within a range of 0 - 20 degrees which means that the wedge angle in the second primary land portion 34 may be within a range of 90 - 70 degrees. The rake angles α1 and α2 are nominal rake angles measured between a plane extending in parallel with a median plane of the rake face 16, and the first and second primary land portions 32, 34, respectively. The plane extending in parallel with a median plane of the rake face 16 extends perpendicularly to the centre axis 46 of the central hole 9, see Fig. 1.

In Fig. 3 the upper broken lines indicating the rake angles α1 and α2 extend in the above-mentioned plane extending in parallel with the median plane of the rake face 16. Accordingly, the rake angles α1 and α2 exemplified in Fig. 3 are positive rake angles with the first and second primary land portions 32, 34 extending below the plane extending in parallel with the median plane of the rake face 16. In a negative rake angle, which is encompassed by the exemplified range of the rake angle α1, the first primary land portion would extend above the plane extending in parallel with the median plane of the rake face 16. The term "increasing gradually" in the context of the rake angle in the transitional primary land portion 38 relates to positive rake angles in the first and second primary land portions 32, 34. Accordingly, in case the rake angle α1 in the first primary land portion is negative, the term "increasing gradually" is to be interpreted as reducing the rake angle until the rake angle becomes positive, at which point the positive rake angle may increase further. Put differently, the wedge angle in the transitional primary land portion 38 decreases gradually from the wedge angle in the first primary land portion 34 to the wedge angle of the second primary land portion 34.

In the embodiments of Figs. 2 and 3 the convex corner edge portion 24 of the first cutting edge 12 has a standard ISO cutting insert nose radius e.g. within the range of 0,4 - 2,4 mm. The corner edge portion 24 extends over an angle of 80 degrees. In alternative embodiments the corner edge portion 24 may extend over an angle within a range of 60 - 90 degrees. Accordingly, the intermediate corner portion 25 indicated in Fig. 1 may extend over an angle within a range of 90 - 120 degrees. Mentioned purely as an example, the outer portion 40 of the corner edge portion 24 may extend over an angle γ within the range of 10 - 25 degrees, see Fig. 2. When the nose radius is small, such as e.g. 0,1 - 0,6 mm, the outer portion of the corner edge portion 24 may extend over a larger angle γ, e.g. 20 - 40 degrees. According to some embodiments the angle δ of the central portion 36 of the corner edge portion 24 may be larger than the two angles γ of the outer portions 40, 40' together.

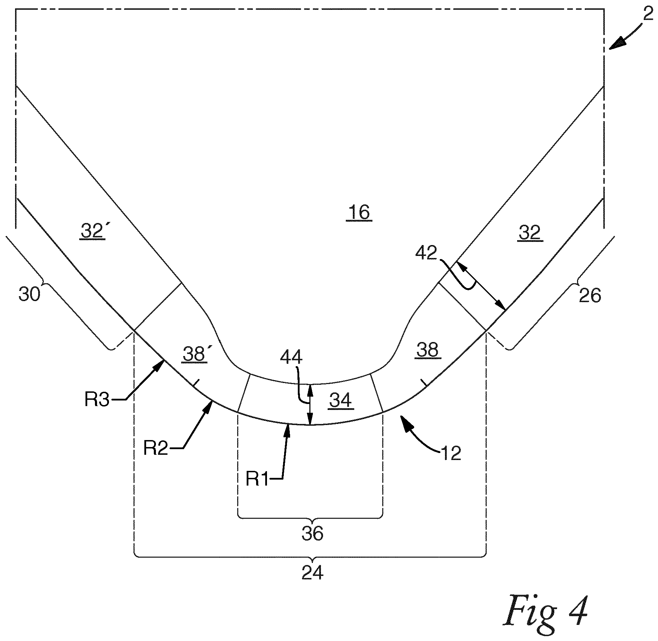

**Fig. 4** illustrates a partial top view of the first cutting edge 12 of a turning tool cutting insert 2 according to embodiments. These embodiments resemble in much the embodiments of Fig. 2. The main differences is that the convex corner edge portion 24 in these embodiments is a multi-radius corner edge portion 24, as described e.g. in EP 759827. In these embodiments the corner edge portion 24 has three different radii R1, R2 and R3. The number of radii may be smaller or larger in alternative embodiments.

Again, the primary land comprises the first primary land portion 32 adjacent the linear edge portion 26, and the second primary land portion 34 adjacent the central portion 36 of the corner edge portion 24. The primary land further comprises a transitional primary land portion 38 adjoining the first primary land portion 32 and the second primary land portion 34, and forming a transition between the first primary land portion 32 and the second primary land portion 34. The first primary land portion 32 extends over a first distance 42 of the rake face 16. The first distance 42 extends in a direction perpendicularly to the linear edge portion 26. The second primary land portion 34 extends over a second distance 44 of the rake face 16. The second distance 44 extends in a direction perpendicularly to tangents of the corner edge portion 24. The first distance 42 is longer than the second distance 44.

In the embodiments of Figs. 2 - 4 the first cutting edges 12 each may comprise a further linear cutting edge portion 30, as discussed in connection with Fig. 1. Accordingly, the primary land may also comprise a further transitional primary land portion 38' adjoining a further first primary land portion 32' and the second primary land portion 34 and forming a transition between the further first primary land portion 32' and the second primary land portion 34.

In Figs. 2- 4 lines have been shown indicating both ends of the transitional primary land portion 38 for illustration purposes. In practice, the transition between each of the first and second primary land portions 32, 34 into the transitional primary land portion 38 may be less distinct.

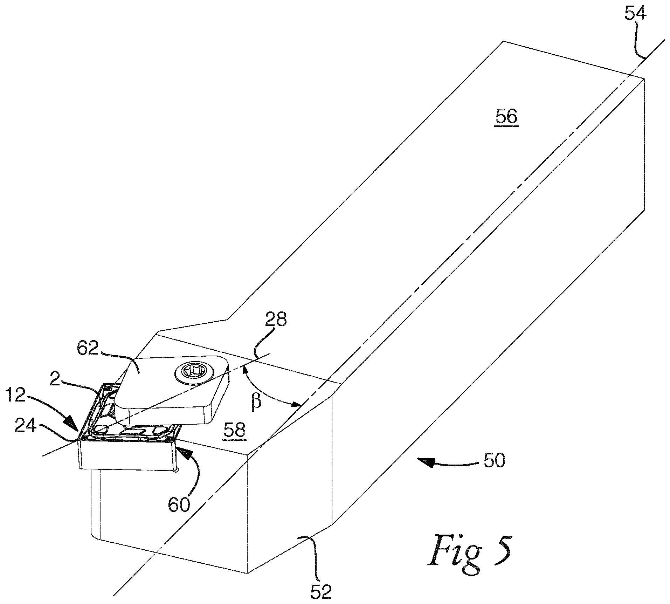

**Fig. 5** illustrates a turning tool 50 according to embodiments. The turning tool 50 comprises a tool body 52. The tool body 52 has a longitudinal axis 54 extending in a direction from an attachment portion 56 of the tool body 52 towards a distal end portion 58 of the tool body 52. The tool body 52 is provided with a recess 60 for receiving a cutting insert 2 at the distal end portion 58. The recess 60 is shaped such that the cutting insert 2 positioned in the recess 60 points an engaging corner edge portion 24 of a first cutting edge 12 thereof in a direction sidewardly of the longitudinal axis 54. That is, a bisector 28 of the corner edge portion 24 forms an angle β with the longitudinal axis 54. The angle β is within the range of >0 - 90 degrees. According to some embodiments the angle β may be within a range of 43 - 47 degrees to the longitudinal axis 54.

The cutting insert 2 arranged in the recess 60 is a turning tool cutting insert 2 according to aspects and/or embodiments discussed herein. A clamping mechanism 62 ensures that the cutting insert 2 is held securely in the recess 60. As an alternative to the illustrated clamping mechanism 62, the cutting insert 2 may be provided with a through hole 9 as disclosed in connection with the embodiments of Fig. 1, through which hole 9 a screw threaded into the tool body 52 may extend.

This invention should not be construed as limited to the embodiments set forth herein. A person skilled in the art will realize that different features of the embodiments disclosed herein may be combined to create embodiments other than those described herein, without departing from the scope of the present invention, as defined by the appended claims. The corner edge portion 24 may for instance comprise a further edge portion between the outer edge portion 40 and the linear edge portion 26. Accordingly, in some embodiments the first primary land portion 32 may extend along the further edge portion of the corner edge portion 24. Although the invention has been described with reference to example embodiments, many different alterations, modifications and the like will become apparent for those skilled in the art. The transitional primary land portion 38 may for instance provide a gradual transition both of the width of the primary land as well as the rake angle. Therefore, it is to be understood that the foregoing is illustrative of various example embodiments and that the invention is defined only by the appended claims.

As used herein, the term "comprising" or "comprises" is open-ended, and includes one or more stated features, elements, steps, components or functions but does not preclude the presence or addition of one or more other features, elements, steps, components, functions or groups thereof.

## Claims

1. A turning tool cutting insert (2) comprising an insert body (4), which comprises at least a first cutting edge (12), the first cutting edge (12) extending along an intersection between a relief face (14) and a rake face (16) of the insert body (4), wherein
the first cutting edge (12) comprise a convex corner edge portion (24) and a straight linear edge portion (26), the corner edge portion (24) adjoining the linear edge portion (26),
wherein the rake face (16) comprises a primary land extending along the first cutting edge (12), the primary land comprising
a first primary land portion (32) adjacent the linear edge portion (26), and
a second primary land portion (34) adjacent a central portion (36) of the corner edge portion (24), and wherein
the first primary land portion (32) differs from the second primary land portion (34),
in that the primary land further comprises
a transitional primary land portion (38) adjoining the first primary land portion (32) and the second primary land portion (34) and forming a transition between the first primary land portion (32) and the second primary land portion (34), wherein
the transitional primary land portion (38) is arranged only adjacent an outer portion (40) of the corner edge portion (24), the outer portion (40) adjoining the central portion (36) of the corner edge portion (24),
**characterised in that** the second primary land portion (34) has a larger rake angle (α2) than the first primary land portion (32),
wherein the transitional primary land portion (38) provides a gradual transition from the first primary land portion (32) to the second primary land portion (34),
wherein the rake angle in the transitional primary land portion (38) increases gradually from the rake angle (α1) in the first primary land portion (32) to the larger rake angle (α2) of the second primary land portion (34).

2. The turning tool cutting insert (2) according to claim 1, wherein
the first primary land portion (32) extends over a first distance (42) of the rake face (16), the first distance (42) extending perpendicularly to the linear edge portion (26), and
the second primary land portion (34) extends over a second distance (44) of the rake face (16), the second distance (44) extending perpendicularly to tangents of the corner edge portion (24), and wherein the first distance (42) is longer than the second distance (44).

3. The turning tool cutting insert (2) according to claim 2, wherein the first distance (42) is within a range of 50 - 500 % longer than the second distance (44).

4. The turning tool cutting insert (2) according to claim 2, wherein a width of the primary land measured perpendicularly to the first cutting edge (12) in the transitional primary land portion (38) decreases gradually from the first distance (42) to the second distance (44).

5. The turning tool cutting insert (2) according to any one of the preceding claims, wherein the first cutting edge (12) comprises a straight further linear edge portion (30) adjoining the corner edge portion (24) opposite to the linear edge portion (26), and wherein the first cutting edge (12) is symmetrical about a bisector (28) of the corner edge portion (24).

6. The turning tool cutting insert (2) according to claim 5, wherein
an 80 degree angle is formed between the linear edge portion (26) and the further linear edge portion (30).

7. The turning tool cutting insert (2) according to any one of the preceding claims, wherein the insert body (4) comprises four cutting edges (12, 18, 20,22), each cutting edge being substantially similar to the first cutting edge (12), such that the turning tool cutting insert (2) is four times indexable in a turning tool.

8. The turning tool cutting insert (2) according to any one of the preceding claims, wherein the second primary land portion (34) has a constant width and a constant rake angle.

9. A turning tool (5) comprising a tool body (52), the tool body (52) having a longitudinal axis (54) extending in a direction from an attachment portion (56) of the tool body (52) towards a distal end portion (58) of the tool body (52), wherein the tool body (52) is provided with a recess (60) for receiving a cutting insert (2) at the distal end portion (58), the recess (60) being shaped such that a cutting insert (2) positioned in the recess (60) points an engaging corner edge portion (24) of a first cutting edge (12) thereof in a direction sidewardly of the longitudinal axis (54),
**characterised in that** a turning tool cutting insert (2) according to any one of the preceding claims is arranged in the recess (60).

10. A turning tool (5) according to claim 9, wherein a bisector (28) of the engaging corner edge portion (24) of the first cutting edge (12) extends sidewardly at an angle (β) within a range of 43 - 47 degrees to the longitudinal axis (54).

## Patentansprüche

1. Schneideinsatz (2) für ein Drehwerkzeug, der einen Einsatzkörper (4) aufweist, der mindestens eine erste Schneidkante (12) aufweist, wobei die erste Schneidkante (12) sich entlang eines Schnittes zwischen einer Freifläche (14) und einer Spanfläche (16) des Einsatzkörpers (4) erstreckt, wobei
die erste Schneidkante (12) einen konvexen Eckkantenabschnitt (24) und einen exakt geraden Kantenabschnitt (26) aufweist, wobei der Eckkantenabschnitt (24) an den geraden Kantenabschnitt (26) anschließt,
wobei die Spanfläche (16) eine Hauptfase aufweist, die sich entlang der ersten Schneidkante (12) erstreckt, wobei die Hauptfase aufweist:
einen an den geraden Kantenabschnitt (26) angrenzenden ersten Hauptfasenabschnitt (32),
einen zweiten Hauptfasenabschnitt (34), der an den zentralen Abschnitt (36) des Eckkantenabschnitts (24) anschließt, und wobei
der erste Hauptfasenabschnitt (32) sich von dem zweiten Hauptfasenabschnitt (34) dadurch unterscheidet, dass
die Hauptfase weiterhin einen Übergangshauptfasenabschnitt (38) aufweist, der an den ersten Hauptfasenabschnitt (32) und den zweiten Hauptfasenabschnitt (34) anschließt und einen Übergang zwischen dem ersten Hauptfasenabschnitt (32) und dem zweiten Hauptfasenabschnitt (34) ausbildet, wobei
der Übergangshauptfasenabschnitt (38) nur zu einem äußeren Abschnitt des Eckkantenabschnitts (24) angrenzend angeordnet ist, wobei der äußere Abschnitt (40) an den zentralen Abschnitt (36) des Eckkantenabschnitts (24) anschließt, **dadurch gekennzeichnet, dass** der zweite Hauptfasenabschnitt (34) einen größeren Spanwinkel (α2) als der erste Hauptfasenabschnitt (32) aufweist,
wobei der Übergangshauptfasenabschnitt (38) einen allmählichen Übergang von dem ersten Hauptfasenabschnitt (32) zum zweiten Hauptfasenabschnitt (34) bereitstellt,
wobei der Spanwinkel entlang des Übergangshauptfasenabschnitts (38) allmählich vom Spanwinkel (α1) des Hauptfasenabschnitt (32) zu dem größeren Spanwinkel (α2) des zweiten Hauptfasenabschnitts zunimmt.

2. Schneideinsatz (2) für ein Drehwerkzeug nach Anspruch 1, wobei der erste Hauptfasenabschnitt (32) sich über eine erste Distanz (42) der Spanfläche (16) erstreckt, wobei die erste Distanz (42) sich rechtwinklig zu dem geraden Kantenabschnitt (26) erstreckt, und wobei der zweite Hauptfasenabschnitt (34) sich über eine zweite Distanz (44) der Spanfläche (16) erstreckt, wobei die zweite Distanz (44) sich rechtwinklig zu Tangenten des Eckkantenabschnitts (24) erstreckt, und wobei die erste Distanz (42) länger als die zweite Distanz (44) ist.

3. Schneideinsatz (2) für ein Drehwerkzeug nach Anspruch 2, wobei die erste Distanz (42) in einem Bereich von 50-500% länger als die zweite Distanz (44) ist.

4. Schneideinsatz (2) für ein Drehwerkzeug nach Anspruch 2, wobei im rechten Winkel zur Hauptschneidkante (12) gemessen die Breite der Hauptfase in dem Übergangsfasenabschnitt (38) von der ersten Distanz (42) zur der zweiten Distanz (44) allmählich zurückgeht.

5. Schneideinsatz (2) für ein Drehwerkzeug, nach einem der vorausgehenden Ansprüche, wobei die erste Schneidkante (12) einen weiteren exakt geraden Kantenabschnitt (30) aufweist, der sich gegenüber dem geraden Kantenabschnitt (26) an den Eckkantenabschnitt (24) anschließt, und wobei die erste Schneidkante (12) symmetrisch zu einer Winkelhalbierenden (28) des Eckkantenabschnitts (24) ist.

6. Schneideinsatz (2) für ein Drehwerkzeug, nach Anspruch 5, wobei ein 80° Winkel zwischen dem geraden Kantenabschnitt (26) und dem weiteren geraden Kantenabschnitt (30) ausgebildet ist.

7. Schneideinsatz (2) für ein Drehwerkzeug, nach einem der vorausgehenden Ansprüche, wobei der Einsatzkörper (4) vier Schneidkanten (12, 18, 20, 22) aufweist, wobei jede Schneidkante im Wesentlichen gleich zu der ersten Schneidkante (12) ist, so dass der Schneideinsatz (2) in einem Drehwerkzeug vierfach indexierbar ist.

8. Schneideinsatz (2) für ein Drehwerkzeug, nach einem der vorausgehenden Ansprüche, wobei der zweite Hauptfasenabschnitt (34) eine konstante Breite und einen konstanten Spanwinkel hat.

9. Drehwerkzeug (5), das einen Werkzeugkörper (52) aufweist, wobei der Werkzeugkörper (52) eine Längsachse (54) hat, die sich in eine Richtung von einem Befestigungsabschnitt (56) des Werkzeugkörpers (52) hin zu einem entfernten Endabschnitts (58) des Werkzeugkörpers (52) erstreckt, wobei der Werkzeugkörper (52) mit einer Aussparung (60) für die Aufnahme eines Schneideinsatzes (2) an dem entfernten Endabschnitt (58) versehen ist, wobei die Aussparung (60) so geformt ist, dass ein in der Aussparung positionierter Schneideinsatz (2) mit einem aktiven Eckkantenabschnitt (24) seiner ersten Schneidkante (12) in eine Richtung seitlich von der Längsachse (54) weist,
**dadurch gekennzeichnet, dass** ein Schneideinsatz für das Drehwerkzeug (2) nach einem der vorausgehenden Ansprüche in der Aussparung (60) angeordnet ist.

10. Drehwerkzeug (5) nach Anspruch 9, wobei eine Winkelhalbierende des aktiven Eckkantenabschnitts (24) der ersten Schneidkante (12) sich seitlich unter einem Winkel (β) im Bereich von 43-47° zur Längsachse (54) erstreckt.

## Revendications

1. Plaquette de coupe d'outil de tournage (2) comprenant un corps de plaquette (4) qui comprend au moins une première arête de coupe (12), la première arête de coupe (12) s'étendant le long d'une intersection entre une face de dépouille (14) et une face d'attaque (16) du corps de plaquette (4), dans laquelle
la première arête de coupe (12) comprend une partie d'arête d'angle convexe (24) et une partie d'arête linéaire droite (26), la partie d'arête d'angle (24) rejoignant la partie d'arête linéaire (26),
dans laquelle la face d'attaque (16) comprend un biseau principal s'étendant le long de la première arête de coupe (12), le biseau principal comprenant
une première partie de biseau principal (32) adjacente à la partie d'arête linéaire (26), et
une deuxième partie de biseau principal (34) adjacente à une partie centrale (36) de la partie d'arête d'angle (24), et dans laquelle
la première partie de biseau principal (32) est différente de la deuxième partie de biseau principal (34),
en ce que le biseau principal comprend en outre
une partie de biseau principal de transition (38) rejoignant la première partie de biseau principal (32) et la deuxième partie de biseau principal (34) et formant une transition entre la première partie de biseau principal (32) et la deuxième partie de biseau principal (34), dans laquelle
la partie de biseau principal de transition (38) est disposée seulement à une position adjacente à une partie extérieure (40) de la partie d'arête d'angle (24), la partie extérieure (40) rejoignant la partie centrale (36) de la partie d'arête d'angle (24),
**caractérisée en ce que** la deuxième partie de biseau principal (34) possède un angle d'attaque (α2) plus grand que la première partie de biseau principal (32),
dans laquelle la partie de biseau principal de transition (38) fournit une transition graduelle de la première partie de biseau principal (32) vers la deuxième partie de biseau principal (34),
dans laquelle l'angle d'attaque dans la partie de biseau principal de transition (38) augmente graduellement à partir de l'angle d'attaque (α1) dans la première partie de biseau principal (32) jusqu'à l'angle d'attaque (α2) plus grand de la deuxième partie de biseau principal (34).

2. Plaquette de coupe d'outil de tournage (2) selon la revendication 1, dans laquelle
la première partie de biseau principal (32) s'étend sur une première distance (42) de la face d'attaque (16), la première distance (42) s'étendant perpendiculairement à la partie d'arête linéaire (26), et
la deuxième partie de biseau principal (34) s'étend sur une deuxième distance (44) de la face d'attaque (16), la deuxième distance (44) s'étendant perpendiculairement à des tangentes de la partie d'arête d'angle (24), et dans laquelle la première distance (42) est plus longue que la deuxième distance (44).

3. Plaquette de coupe d'outil de tournage (2) selon la revendication 2, dans laquelle la première distance (42) se trouve dans une plage de 50 à 500 % plus longue que la deuxième distance (44).

4. Plaquette de coupe d'outil de tournage (2) selon la revendication 2, dans laquelle une largeur du biseau principal mesurée perpendiculairement à la première arête de coupe (12) dans la partie de biseau principal de transition (38) diminue graduellement de la première distance (42) à la deuxième distance (44).

5. Plaquette de coupe d'outil de tournage (2) selon l'une quelconque des revendications précédentes, dans laquelle la première arête de coupe (12) comprend une autre partie d'arête linéaire droite (30) rejoignant la partie d'arête d'angle (24) à l'opposé de la partie d'arête linéaire (26), et dans laquelle la première arête de coupe (12) est symétrique par rapport à une bissectrice (28) de la partie d'arête d'angle (24).

6. Plaquette de coupe d'outil de tournage (2) selon la revendication 5, dans laquelle un angle de 80 degrés est formé entre la partie d'arête linéaire (26) et l'autre partie d'arête linéaire (30).

7. Plaquette de coupe d'outil de tournage (2) selon l'une quelconque des revendications précédentes, dans laquelle le corps de plaquette (4) comprend quatre arêtes de coupe (12, 18, 20, 22), chaque arête de coupe étant substantiellement similaire à la première arête de coupe (12), de sorte que la plaquette de coupe d'outil de tournage (2) soit indexable quatre fois dans un outil de tournage.

8. Plaquette de coupe d'outil de tournage (2) selon l'une quelconque des revendications précédentes, dans laquelle la deuxième partie de biseau principal (34) a une largeur constante et un angle d'attaque constant.

9. Outil de tournage (5) comprenant un corps d'outil (52), le corps d'outil (52) ayant un axe longitudinal (54) s'étendant dans une direction à partir d'une partie de fixation (56) du corps d'outil (52) en direction d'une partie d'extrémité distale (58) du corps d'outil (52), dans lequel le corps d'outil (52) est doté d'un évidement (60) destiné à recevoir une plaquette de coupe (2) au niveau de la partie d'extrémité distale (58), l'évidement (60) étant formé de sorte qu'une plaquette de coupe (2) positionnée dans l'évidement (60) pointe vers une partie d'arête d'angle en engagement (24) d'une première arête de coupe (12) de celle-ci dans une direction latérale de l'axe longitudinal (54),
**caractérisé en ce qu'**une plaquette de coupe d'outil de tournage (2) selon l'une quelconque des revendications précédentes est disposée dans l'évidement (60).

10. Outil de tournage (5) selon la revendication 9, dans lequel une bissectrice (28) de la partie d'arête d'angle en engagement (24) de la première arête de coupe (12) s'étend latéralement suivant un angle (β) dans une plage de 43 à 47 degrés par rapport à l'axe longitudinal (54).
